(19)

Europäisches
Patentamt
European
Patent Office
Office européen
des brevets

(11) **EP 1 901 511 A1**

(12) **EUROPEAN PATENT APPLICATION**

(43) Date of publication:
**19.03.2008 Bulletin 2008/12**

(51) Int Cl.:
*H04L 27/26* (2006.01)     *H04Q 7/38* (2006.01)

(21) Application number: **06291461.9**

(22) Date of filing: **14.09.2006**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(71) Applicant: **TEXAS INSTRUMENTS FRANCE**
**06271 Villeneuve Loubet Cedex,**
**Nice (FR)**

(72) Inventors:
• **Bertrand, Pierre**
  **06600 Antibes (FR)**

• **Jiang, Jing**
  **Allen, TX 75013 (US)**
• **Kangude, Shantanu**
  **Dallas, TX 75251 (US)**

(74) Representative: **Holt, Michael**
**Texas Instruments, Ltd.**
**Patents**
**800 Pavillon Drive**
**Northampton Business Park**
**Northampton**
**Northamptonshire NN4 7YL (GB)**

(54) **Non synchronized random access channel signal structure for wireless networks**

(57)    There is provided an updated Non-synchronized Random Access structure for Long- term Evolution wireless networks. This application addresses the non-synchronized Random Access (NSRA) structure to be compatible with an increased TTI length from 0.5ms to 1.0ms and a changed resource block granularity from 25 to 12 sub- carriers (1 sub-carrier = 15kHz). These changes impact both the minimum RA burst - length and the preamble bandwidth. As a result, the RA burst structure proposed so far also needs to be updated; such a structure is provided herein.

EP 1 901 511 A1

**Description**

1. INTRODUCTION

The present patent application disclosure is an update of the patent application TI-62486: Non-synchronized Random Access structure for Long-term Evolution wireless networks. This application addresses the non-synchronized Random Access (NSRA) structure in order to comply with the decision made during the last 3GPP RAN1 meeting (#46 in Tallinn, 8/28/06 - 9/1/06) to increase the TTI length from 0.5ms to 1.0ms and to change the resource block granularity from 25 to 12 sub-carriers (1 sub-carrier = 15kHz). This decision impacts both the minimum RA burst length and the preamble bandwidth. As a result, the RA burst numerology proposed so far also needs to be updated. This application also addresses the following points:

- The preamble has a cyclic prefix (CP) to ease the frequency domain detection at the receiver (decision made during the last 3GPP RAN1 meeting);
- A SC-FDMA transmitter/receiver structure is proposed and its impact on the NSRA burst numerology is derived;
- A solution is provided that allows mapping a preamble, shortened to the closest prime number length, onto the orthogonal access scheme of the LTE UL transmissions, thus preserving the powerful interference mitigation properties of prime-length Zadoff-Chu sequences;
- The 1 ms NSRA burst structure is dimensioned to address the larger cell size achievable from coverage perspective;
- However, since it will also be used for smaller cell sizes, the number of ZCZ sequences is maximized independently for each cell by the NodeB by configuring the minimum necessary cyclic shift increment;
- Since this update does not consider the optional wideband pilot proposed in the previous versions of this patent, it is proposed that the 1st post-preamble UL data is frequency scheduled within the preamble bandwidth.

2. GENERIC STRUCTURE

In E-UTRA, the RA channel is a contention-based channel multiplexed with scheduled data in a TDM/FDM manner [1]. It is accessible during RA slots of duration $T_{RA}$ and period $T_{RA}$ (Figure 1).

Figure 1: NSRA slots

Figure 2 illustrates the generic structure of the NSRA burst, carrying a preamble. A guard period is inserted at the end of the RA slot to maintain time orthogonality of the RA burst with the next TTI. The guard time reflects the time uncertainty corresponding to the maximum round-trip delay resulting from the cell size + the maximum delay spread of the channel (5μs). As agreed during the last 3GPP RAN1 meeting (#46 in Tallinn, 8/28/06 - 9/1/06), a cyclic prefix is inserted at the preamble start to ease a frequency domain receiver implementation. It has the same size as the guard time.

Figure 2: Non-synchronized RA burst structure: 1 TTI burst

## 3. PREAMBLE BANDWIDTH

In our European patent application Docket no. TI-62486 we recommended using 1.25MHz bandwidth (= 1.125 MHz sampling rate) for the preamble of the NSRA burst. This was corresponding to three times the resource block granularity envisioned so far for LTE: 375 kHz [1]. This preamble bandwidth was further agreed during the 3GPP RAN1 Ad Hoc meeting on LTE in Cannes, June 27-30 2006. During the last 3GPP RAN1 meeting (#46 in Tallinn, 8/28/06 - 9/1/06) it was decided to change the resource block (RB) granularity from 25 to 12 sub-carriers (1 long block sub-carrier = 15 kHz), i.e. from 375 kHz to 180 kHz. As a result, the preamble bandwidth needs to be upgraded to comply with this new granularity. Given the detection performance versus preamble bandwidth trade-off analyzed in update 06/19/06 of TI-62486 (Section 2.2) remains valid, we propose to upgrade the preamble bandwidth starting with the closer bandwidth available with the new RB size: 6 x RBs = 1080 kHz. This will be adjusted to cope with the exact numerology proposed in Section 6.

## 4. SC-FDMA TRANSMITTER/RECEIVER STRUCTURE

Figure 3 describes the principle of the NSRA burst transmitter and receiver, both using the DFT-based (frequency domain) SC-FDMA generation. The following notations are used:

- $f_s$ is the system sampling rate: 1.92, 3.84, 7.64, 15.36, 23.04, 30.72 MHz for 1.25, 2.5, 5, 10, 15, 20 MHz system bandwidth respectively [1]
- $R_s$ is the preamble sampling rate
- $N_p$ is the preamble sequence length (in the preamble sampling rate)
- $N_{cp}$ is the cyclic prefix length (in the system sampling rate)
- $T_p$ is the preamble duration

The first constraint of this method is that the size of the DFT and IDFT, $N_{DFT}$, must be an integer number:

$$(1) \qquad N_{DFT} = f_s T_p = k; \quad k \; integer$$

An additional constraint is the reusability of the FFT/IFFT components available for mapping/de-mapping the long blocks (LB) of the UL sub-frame of UL scheduled data in/from the SC-FDMA access scheme [1]. Moreover, it should be possible to implement the large DFT/IDFT blocks, involved in the NSRA transmitter and receiver to perform similar preamble sub-carrier mapping/de-mapping, through a combination of the elementary FFT/IFFT blocks, using e.g. a Divide-And-Conquer approach [8], where a $n \times 2^m$ DFT is implemented with an FFT of $2^m$ samples is combined with a DFT of $n$ samples. Similar to (1), The FFT size $N_{FFT}$ of the UL sub-frame LBs scales linearly with the system sampling rate:

$$(2) \qquad N_{DFT} = k \, N_{FFT} = k \, f_s T_{LB};$$

k integer

where $T_{LB}$=66.67 $\mu$s is the LB duration. Hence, this constraint refines (1) as follows:

$$(3) \qquad T_p = k \, T_{LB};$$

k integer

Note the above relation also preserves the orthogonality in the frequency domain of the preamble sub-carriers and the surrounding UL scheduled data sub-carriers since the LB sub-carrier spacing $\Delta f_{LB}$ is an integer multiple of the NSRA sub-carrier spacing $\Delta f_{RACH}$:

$$(4) \qquad \Delta f_{RACH} = \frac{f_s}{N_{DFT}} = \frac{1}{T_p} = \frac{1}{kT_{LB}} = \frac{1}{k} \Delta f_{LB};$$

k integer

Finally note that, since the preamble sequence is a deterministic sequence, a simplified transmitter only needs to store the frequency domain preamble samples and the generation process starts with the sub-carrier mapping.

Figure 3: NSRA SC-FDMA Transmitter/Receiver structures

## 5. PREAMBLE SEQUENCE LENGTH/BANDWIDTH ADJUSTMENT

The choice of the NSRA preamble sequence was made during the last 3GPP RAN1 meeting (#46 in Tallinn, 8/28/06 - 9/1/06): a Zadoff-Chu (ZC) sequence. Although no agreement was made on the sequence length yet, it is a common understanding [2-7] that such sequences exhibit powerful interference mitigation properties when the sequence length is a prime number. Therefore we address in this section how to handle such sequence length adjustment with the SC-FDMA transmitter structure (see Figure 4):

1. A preamble duration $T_p$ is chosen to comply both coverage performance. (Section 6) and SC-FDMA generation constraint reflected by (3);

2. An initial preamble sequence length $N_{pi}$ is derived from the NSRA burst bandwidth $R_{si}$ (= 6 RBs = 1080 kHz, see Section 3): $N_{pi} = T_p R_{si}$;

3. The sequence length is shortened to the closest prime number $N_p$;

4. Since the sequence duration remains $T_p$, the adjusted preamble sampling rate is $R_s = R_{si} N_p / N_{pi}$;

5. A DFT transforms the $N_p$ time samples into $N_p$ frequency tones;

6. The $N_p$ frequency tones are mapped onto sub-carriers allocated by the NodeB to the NSRA burst;

7. Since $N_{pi}$ sub-carriers (= 6 RBs = 1080 kHz) are allocated to the NSRA burst and the shortened preamble occupies only $N_p$ sub-carriers, then the additional $N_{pi} - N_p$ subcarriers are set to zero and evenly distributed around the preamble sub-carriers, so as to further isolate the preamble from surrounding RBs.

Figure 4: NSRA preamble sequence length and bandwidth adjustment to prime-length sequence in a SC-FDMA Transmitter

Again, the comment made in Section 4 on simplified transmitter holds true: a simplified transmitter only needs to store in a look-up table (LUT) the frequency domain preamble samples and the generation process starts with the sub-carrier mapping.

## 6. COVERAGE AND NUMEROLOGY

Two different types of coverage performance analysis have been done:

- Under noise-limited scenario [2-5]
- Under interference-limited scenario [6]

The former does not assume any UL interference on top of the regular pathloss model, therefore the analysis reduces to a link budget computation. The latter accounts for both the AWGN and interference from surrounding cells and assumes an additional 20 dB penetration loss, as specified in the dimensioning scenario cases 1 and 3 in [1]. It involves a 19-cell system level simulation. Both approaches are valid considering they model two different cell types, practically deployed in real systems:

• high density, small urban cell (interference limited scenario)
• low density, medium to large sub-urban and rural cell (noise limited scenario)

### 6.1. Noise-limited scenario

The coverage performance of noise limited scenario is illustrated in Figure 5, extracted from [3].

Figure 5: Coverage performance of the 0.5 and 1ms NSRA burst in noise-limited scenario

It can be observed that the coverage performance of the 0.5ms and 1 ms NSRA burst in *noise limited* scenarios is 7.75 and 14.25 km cell radius respectively.

Therefore, an appropriate numerology for the 1 ms NSRA burst (two sub-frames) is given in Table 3, which also shows the equivalent numerology if a 0.5ms (1 sub-frame) RA burst was used. The numerology is compliant with the SC-FDMA constraints and structure elaborated in Sections 4 and 5. In addition,

Table 2 shows the maximum achievable number of zero correlation zone (ZCZ) sequences resulting from cyclic shifts of a ZC mother sequence for each structure as well as the required $E_S/N_0$ in 375kHz used in Figure 6 for interference limited scenarios and resulting from the 18 dB $E_P/N_0$ necessary to detect the NSRA preamble with a detection probability $P_d$ = 0.99.

Table 1: Field durations of the 0.5 and 1 ms NSRA bursts targeting 7.5 and 15 km cell radius respectively

| | | Fields duration ($\mu$s) | | | Preamble sampling rate Rs (MHz) | Max cell radius from GT (km) |
|---|---|---|---|---|---|---|
| | | preamble | | | | |
| Structure | CP | Sequence length | duration ($\mu$s) | GT | | |
| 1 sub-frame burst | 50.00 | 431 | 400.00 | 50.00 | 1.0775 | 7.5 |
| 2 sub-frame burst | 100.00 | 863 | 800.00 | 100.00 | 1.07875 | 15 |

Table 2: Number of achievable ZCZ sequences and required preamble $E_s/N_0$ in 375 kHz

| Structure | Sequence length | Preamble duration ($\mu$s) | Cyclic shifts per ZC seq. | Ep/No req. (dB) | Es/No req. (dB) | Es/No in 375kHz (dB) |
|---|---|---|---|---|---|---|
| 1 sub-frame burst | 431 | 400.00 | 7 | 18.00 | -8.34 | **-3.75** |
| 2 sub-frame burst | 863 | 800.00 | 7 | 18.00 | -11.36 | **-6.77** |

6.2. Interference limited scenario

Extrapolating the coverage performance analysis run for the 0.5 ms burst in [6] under interference limited scenarios to the 1 ms burst yields a maximum achievable ISD of 1.732 km (1 km cell radius), see Figure 6.

## UE Tx power = 24dBm

## UE Tx power = 21dBm

Figure 6: SINR cdf in 375 kHz for various cell sizes, UE Tx power – Associated coverage performance of the 0.5 and 1ms NSRA burst

However, the SINR cdf still reflects the statistics collected with a 0.5ms TTI. However, some improvements are expected on the SINR cdf:

- From the new (extended) TTI length
- From the improved UL power control method
- From higher antenna gains at the NodeB for cell radii larger than 1 km

As a result, waiting for confirming the above assumptions, we extrapolate that the coverage performance of the 0.5ms and 1 ms NSRA burst in *interference limited* scenarios is 2.5km and 5 km cell radius respectively.

Therefore, an appropriate numerology for the 1ms NSRA burst (two sub-frames) is given in Table 3, which also shows the equivalent numerology if a 0.5ms (1 sub-frame) RA burst was used. The numerology is compliant with the SC-FDMA constraints and structure elaborated in Sections 4 and 5. In addition, Table 4 shows the maximum achievable number of ZCZ sequences resulting from cyclic shifts of a ZC mother sequence for each structure, as well as the equivalent $E_S/N_0$ in 375kHz used in Figure 6 and resulting from the 18 dB $E_P/N_0$ necessary to detect the NSRA preamble with a detection probability $P_d$ = 0.99.

Table 3: Field durations of the 0.5 and 1 ms NSRA bursts targeting 2.5 and 5 km cell radius respectively

| | Fields duration ($\mu$s) | | | | Preamble sampling rate Rs (MHz) | Max cell radius from GT (km) |
| | | preamble | | | | |
| Structure | CP | Sequence length | duration ($\mu$s) | GT | | |
|---|---|---|---|---|---|---|
| 1 sub-frame burst | 16.67 | 503 | 466.67 | 16.67 | 1.078 | 2.5 |
| 2 sub-frame burst | 33.33 | 997 | 933.33 | 33.33 | 1.068 | 5.0 |

Table 4: Number of achievable ZCZ sequences and required preamble $E_s/N_0$ in 375 kHz

| Structure | Sequence length | Preamble duration ($\mu$s) | Cyclic shifts per ZC seq. | Ep/No req. (dB) | Es/No req. (dB) | Es/No in 375kHz (dB) |
|---|---|---|---|---|---|---|
| 1 sub-frame burst | 503 | 466.67 | **21** | 18.00 | -9.02 | **-4.42** |
| 2 sub-frame burst | 997 | 933.33 | **24** | 18.00 | -11.99 | **-7.39** |

6.3. Discussion/Conclusion

Given a NSRA burst length, an attractive solution consists in using for both noise and interference limited scenarios the NSRA structure dimensioned from noise limited scenario, provided that the structure dimensioned for the larger cell size should also "work" for smaller cell sizes. However, this structure would be sub-optimal for the interference limited scenarios. Table 5 summarizes the resulting degradation with respect to:
• The detection performance loss due to over-dimensioning both guard time and CP resulting in a shorter preamble
• The loss on the number of achievable ZCZ sequences

Table 5: Noise limited versus interference limited NSRA structures: comparison summary

| | # of cyclic shifts per ZC seq. | | Es/No gap due to shorter preamble (dB) |
| Structure | Larger cell size (noise limited) | Smaller cell size (IF limited) | |
|---|---|---|---|
| 1 sub-frame burst | 7 | 21 | 0.67 |
| 2 sub-frame burst | 7 | 24 | 0.63 |

The detection performance loss due to shortening the preamble is in the 0.6-0.7 dB range, which does not justify alone having 2 NSRA structures per burst length. On the other hand, the structure supporting a smaller cell size (interference limited) is attractive since it provides a factor 3 gain on the available number of achievable ZCZ sequences. Note that increasing the ZCZ set size for small urban cells clearly makes sense, given the expected higher density and therefore the higher expected offered load. But this holds true for the other structure as well, if one considers a smaller ZCZ. As a result, we propose the following:

• the (only) NSRA structure defined for E-UTRA is the structure dimensioned from noise limited scenario; the numerology is defined in Section 6.1, Table 1, and explicitly specified in Table 6 for all spectrum allocations.

• the NodeB configures the ZCZ sequence set size (i.e. the cyclic shift offset of the preamble sequences) for each cell independently, based on cell size, load, ...

Table 6: NSRA burst numerology for all spectrum allocations

| NSRA burst duration (ms) | NSRA sub-carrier spacing kHz | # allocated sub-carriers to NSRA burst | Preamble size | | Preamble sampling rate (MHz) | Spectrum allocation (MHz) | System sampling rate MHz | IDFT samples | CP duration (μs/samples) | | GT duration (μs/samples) | |
|---|---|---|---|---|---|---|---|---|---|---|---|---|
| | | | μs | #of occupied sub-carriers | | | | | | | | |
| 1.0 | 1.25 | 864 | 800 | 863 | 1.07875 | 1.25 | 1.92 | 1536 | 100 | 192 | 100 | 192 |
| | | | | | | 2.5 | 3.84 | 3072 | | 384 | | 384 |
| | | | | | | 5 | 7.68 | 6144 | | 768 | | 768 |
| | | | | | | 10 | 15.36 | 12288 | | 1536 | | 1536 |
| | | | | | | 15 | 23.04 | 18432 | | 2304 | | 2304 |
| | | | | | | 20 | 30.72 | 24576 | | 3072 | | 3072 |
| 0.5 | 2.5 | 432 | 400 | 431 | 1.0775 | 1.25 | 1.92 | 768 | 50 | 96 | 50 | 96 |
| | | | | | | 2.5 | 3.84 | 1536 | | 192 | | 192 |
| | | | | | | 10 | 15.36 | 6144 | | 384 | | 384 |
| | | | | | | 10 | 15.36 | 6144 | | 768 | | 768 |
| | | | | | | 15 | 23.04 | 9216 6 | | 1152 | | 1152 |
| | | | | | | 20 | 30.72 | 12288 | | 1536 | | 1536 |

**EP 1 901 511 A1**

We updated the proposed NSRA burst structure so as to reflect the recent decision changes made in the LTE numerology as well as to provide a better flexibility in addressing both small loaded urban cell (interference limited scenario) and medium to large low-loaded sub-urban and rural cell (noise limited scenario). This application also claims:

1. The structure of the NSRA burst as shown in
2. Figure 2 and the associated numerology is given in Table 1 and Table 6 for 0.5ms (1 sub-frame) and 1 ms (2 sub-frames).
3. This numerology complies with a SC-FDMA transmitter/receiver structure, described in Figure 3. In particular it allows re-using the available FFT/IFFT components required for processing the long blocks (LB) of the UL sub-frame and preserves the frequency-domain orthogonality characteristic of the SC-FDMA access scheme.
4. The NodeB optimizes the ZCZ sequence set size by configuring the minimum necessary cyclic shift increment of the preamble ZC sequence(s) for each cell independently, based on cell size, load, ...
5. The NSRA burst occupies 6 LTE resource blocks or 12 LB sub-carriers each, which translates into 1080 kHz bandwidth (sampling rate).
6. The method described in Section 5 and illustrated in Figure 4 allows adjusting the NSRA preamble sequence length to prime-length sequence in a SC-FDMA Transmitter. The NSRA preamble sampling rate is adjusted accordingly to the value(s) reported in Table 1.
7. A simplified SC-FDMA transmitter is described in Section 4 and 5, where the frequency domain preamble samples are stored in a LUT and the generation process starts with the sub-carrier mapping.
8. Localized frequency scheduling within the preamble bandwidth is used for the 1st post-preamble UL data transmission; the preamble is used for channel sounding.

References

[1] TR 25.814 v7.0.0, "Physical layers aspects of evolved UTRA (E-UTRA)".
[2] R1-062139 "On the signal structure of non-synchronized RACH", Nortel
[3] R1-062175 "Random Access burst design for E-UTRA", Panasonic, NTT DoCoMo
[4] R1-062274 "E-UTRA scalability of Random Access preamble with Cyclic Prefix", Ericsson
[5] R1-062306 "RACH Sequence Extension Methods for Large Cell Deployment", LGE
[6] R1-062003 "Non synchronized Random Access Coverage Analysis for E-UTRA", Texas Instruments
[7] R1-062004 "Non synchronized Random Access Sequence Design for E-UTRA", Texas Instruments
[8] J. Proakis, and D. Manolakis, "Digital Signal Processing: Principles, Algorithms, and Applications". Macmillan Publishing Company, 1992.

**Claims**

1. A non-synchronized random access structure substantially as hereinbefore described.

**European Patent**
**Office**

**PARTIAL EUROPEAN SEARCH REPORT**    Application Number

which under Rule 45 of the European Patent Convention EP 06 29 1461
shall be considered, for the purposes of subsequent
proceedings, as the European search report

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X,D | NORTEL NETWORKS: "On the signal structures of non-synchronized RACH" 3GPP TSG RAN MEETING #46, no. R1-062139, 28 August 2006 (2006-08-28), XP002422893 Tallin, Estonia * the whole document * | 1 | INV. H04L27/26 H04Q7/38 |
| X,D | PANASONIC, NTT DOCOMO: "Random Access Burst Design for E-UTRA" 3GPP TSG RAN WG1 MEETING #46, no. R1-062175, 28 August 2006 (2006-08-28), XP002422894 Tallin, Estonia * the whole document * | 1 | |
| X,D | ERICSSON: "E-UTRA scalability of Random Access preamble with cyclic prefix" TSG-RAN WG1 MEETING #46, no. R1-062274, 28 August 2006 (2006-08-28), XP002422895 Tallin, Estonia * the whole document * | 1 | |

TECHNICAL FIELDS SEARCHED (IPC)

H04L

-/--

## INCOMPLETE SEARCH

The Search Division considers that the present application, or one or more of its claims, does/do not comply with the EPC to such an extent that a meaningful search into the state of the art cannot be carried out, or can only be carried out partially, for these claims.

Claims searched completely :

Claims searched incompletely :

Claims not searched :

Reason for the limitation of the search:

see sheet C

| Place of search | Date of completion of the search | Examiner |
|---|---|---|
| Munich | 2 March 2007 | Snell, Timothy |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

 

& : member of the same patent family, corresponding
document

EPO FORM 1503 03.82 (P04C07)

| | European Patent Office | PARTIAL EUROPEAN SEARCH REPORT | Application Number |
|---|---|---|---|
| | | | EP 06 29 1461 |

## DOCUMENTS CONSIDERED TO BE RELEVANT

| Category | Citation of document with indication, where appropriate, of relevant passages | Relevant to claim |
|---|---|---|
| X,D | LGE: "RACH sequence extension methods for large cell deployment" 3GPP TSG RAN1 LTE WG1 MEETING #46, no. R1-062306, 28 August 2006 (2006-08-28), XP002422896 Tallinn, Estonia * the whole document * | 1 |
| X,D | TEXAS INSTRUMENTS: "Non-synchronized Random Access Coverage Analysis for E-UTRA" 3GPP TSG RAN WG1 MEETING #46, no. R1-062003, 28 August 2006 (2006-08-28), pages 1/4-4/4, XP002422897 Tallinn, Estonia * the whole document * | 1 |
| X,D | TEXAS INSTRUMENTS: "Non-synchronized Random Access Sequence Design for E-UTRA" 3GPP TSG RAN WG1 MEETING #46, no. R1-062004, 28 August 2006 (2006-08-28), pages 1/4-4/4, XP002422898 Tallinn, Estonia * the whole document * | 1 |
| X,D | 3RD GENERATION PARTNERSHIP PROJECT; TECHNICAL SPECIFICATION GROUP RADIO ACCESS NETWORK;: "Physical layer aspects for evolved Universal Terrestrial Radio Access (UTRA)" 3GPP TR 25.814 V7.0.0 RELEASE 7, June 2006 (2006-06), pages 78-84, XP002422899 Sophia Antipolis, FR Section 9.1.2.1.1 | 1 |

CLASSIFICATION OF THE APPLICATION (IPC)

TECHNICAL FIELDS SEARCHED (IPC)

**European Patent Office**

**INCOMPLETE SEARCH SHEET C**

Application Number

EP 06 29 1461

Claim(s) searched incompletely:
        1

Reason for the limitation of the search:

The formulation of the claim "A non-synchronized random access structure substantially as hereinbefore described" renders it impossible to know for which combination of technical features protection is sought. Hence the search report is limited to documents referred to by the applicant.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- Physical layers aspects of evolved UTRA (E-UTRA. *TR 25.814 v7.0.0*
- On the signal structure of non-synchronized RACH. *R1-062139*
- Random Access burst design for E-UTRA. *R1-062175*
- E-UTRA scalability of Random Access preamble with Cyclic Prefix. *R1-062274*
- RACH Sequence Extension Methods for Large Cell Deployment. *R1-062306*
- Non synchronized Random Access Coverage Analysis for E-UTRA. *R1-062003*
- Non synchronized Random Access Sequence Design for E-UTRA. *R1-062004*
- **J. PROAKIS ; D. MANOLAKIS.** Digital Signal Processing: Principles, Algorithms, and Applications. Macmillan Publishing Company, 1992